# EUROPÄISCHE PATENTSCHRIFT

(11) **EP 2 745 460 B1**
(45) Veröffentlichungstag und Bekanntmachung des Hinweises auf die Patenterteilung: **10.03.2021**
(21) Anmeldenummer: 12813748.6
(22) Anmeldetag: 16.08.2012
(51) Int. Cl.: G06F 1/04, H04L 25/02, H04W 52/02, H04L 7/00

(54) **SCHALTUNGSANORDNUNG UND VERFAHREN ZUM UEBERTRAGEN VON SIGNALEN**
CIRCUIT ARRANGEMENT AND METHOD FOR TRANSMITTING SIGNALS
CIRCUITERIE ET PROCÉDÉ DE TRANSMISSION DE SIGNAUX

(30) Priorität: 16.08.2011 DE 102011052761
(43) Veröffentlichungstag der Anmeldung: 25.06.2014
(73) Patentinhaber: Silicon Line GmbH, 80687 München (DE)
(72) Erfinder: BLON, Thomas, 80687 Muenchen (DE); HOELTKE, Holger, 80995 Muenchen (DE)
(74) Vertreter: Hofmann, Andreas
(86) Internationale Anmeldenummer: PCT/DE2012/200052
(87) Internationale Veröffentlichungsnummer: WO 2013/023654

(56) Entgegenhaltungen:
- US-A- 5 968 179
- "SL83014 by Silicon Line GmbH", , 3. März 2011 (2011-03-03), XP055057661, Gefunden im Internet: URL:http://www.silicon-line.com/SL83014.ht m [gefunden am 2013-03-25]
- "Snapshots of SL83014 by Silicon Line GmbH - *Evidence of publication prior to priority date*", , 3. März 2011 (2011-03-03), XP055057663, Gefunden im Internet: URL:http://www.silicon-line.com/SL83014.ht m [gefunden am 2013-03-25]
- "MIPI Alliance Specification for D-PHY", , 22. September 2009 (2009-09-22), Seiten 1-123, XP055057664, Gefunden im Internet: URL:http://www.mipi.org/specifications/phy sical-layer [gefunden am 2013-03-25]
- DARTNELL P ET AL: "Serdes Framer Interface Level 5 (SFI-5): Implementation Agreement for 40Gb/s Interface for Physical Layer Devices (OIF-SF15-01.01)", OPTICAL INTERNETWORKING FORUM (OIF), , 29. Januar 2002 (2002-01-29), Seite 62pp, XP009119852, Gefunden im Internet: URL:http://www.oiforum.com/public/document s/OIF-SFI5-01.0.pdf [gefunden am 2009-07-22]

## Beschreibung

### Technisches Gebiet

Die vorliegende Erfindung betrifft eine Schaltungsanordnung gemäß dem Oberbegriff des Anspruchs 1 sowie ein Verfahren gemäß dem Oberbegriff des Anspruchs 11.

### Stand der Technik, insbesondere dessen Nachteile und technische Probleme

Die Bitübertragungsschicht oder physikalische Schicht (PHY) ist die unterste Schicht im O[pen]S[ystems]I[nterconnection]-Schichtenmodell, das auch OSI-Referenzmodell genannt wird und ein Schichtenmodell der Internationalen Organisation für Normung (ISO) bezeichnet, das wiederum als Designgrundlage von Kommunikationsprotokollen in Rechnernetzen dient.

Die Physical Layer (PHY) ist für Combining, F[orward]E[rror]C[orrection], Modulation, Power Control, Spreading (C[ode]D[ivision]M[ultiple]A[ccess]) und dergleichen zuständig und kennt weder Daten noch Anwendungen, sondern nur Nullen und Einsen. PHY stellt der darüber liegenden Sicherungsschicht (D[ata]L[ink]L[ayer]), insbesondere einer Teilschicht namens M[edia]A[ccess]C[ontrol]-Layer, logische Kanäle zur Verfügung (Transportkanäle bei U[niversal]M[obile]T[elecommunications]S[ystem]).

D-PHY ermöglicht grundsätzlich eine flexible, kostengünstige und schnelle serielle Schnittstelle für Kommunikationsverbindungen zwischen Komponenten innerhalb einer mobilen Vorrichtung.

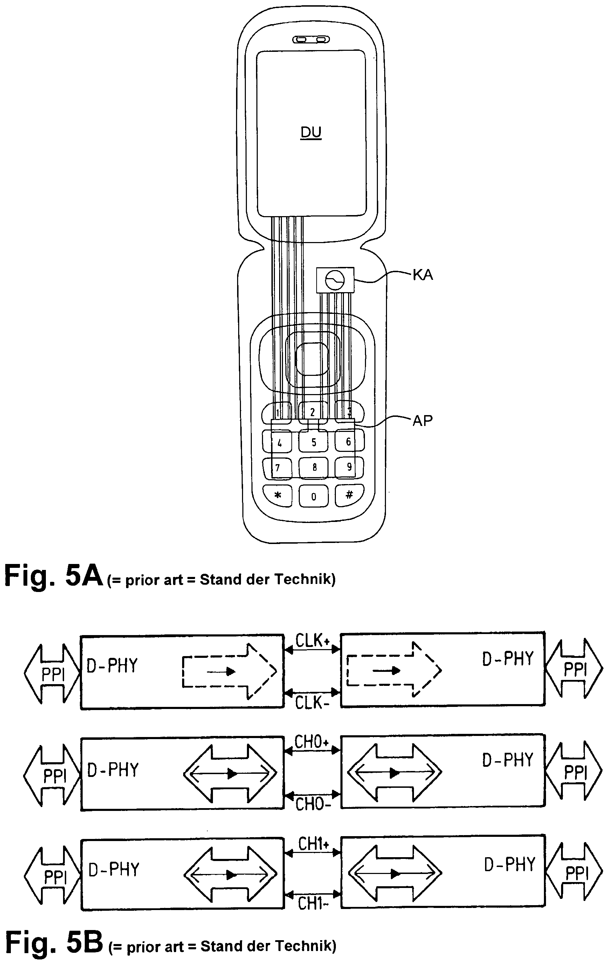

Wie anhand Fig. 5A veranschaulicht, stellt in modernen Mobiltelefonen eine Datenquelle, zum Beispiel ein Applikationsprozessor, am M[obile]I[ndustry]P[rocessor]I[nterface]-D[isplay]S[erial]I[nterface] Bilddaten als D-PHY-Signale für die Darstellung an einer angeschlossenen Datensenke, zum Beispiel an einem angeschlossenen Display, zur Verfügung. Auch kann eine Datensenke, zum Beispiel ein Applikationsprozessor, über ein MIPI-C[amera]S[erial]I[nterface] Bilddaten von einer angeschlossenen Datenquelle, zum Beispiel von einer angeschlossenen Kamera, im D-PHY-Format empfangen.

Ein auf dem D-PHY-Protokoll basierendes DSI oder DSI-2 oder CSI oder CSI-2 oder CSI-3 umfasst bis zu vier differentielle Datenleitungen und eine differentielle Taktleitung, die den Applikationsprozessor elektrisch mittels Kupferkabel mit dem Display und/oder mit der Kamera verbinden. Die Datenrate pro differentieller Datenleitung beträgt bis zu 1,5 Gbps (Gigabit pro Sekunde).

Dieses konventionelle Versenden und Empfangen der D-PHY-DSI- oder D-PHY-CSI-Signale über ein bis vier differentielle Datensignale und eine differentielle Taktleitung ist in der D-PHY-Schnittstellenkonfiguration der Fig. 5B anhand zweier bidirektionaler Datenkanäle (= sogenannte data lanes CH0+, CH0- und CH1+, CH1-) und einer Taktleitung (= sogenannte clock lane CLK+, CLK-) zwischen den Modulen der Master-Seite (= Datenquelle, zum Beispiel Kamera und/oder Applikationsprozessor) und den Modulen der Slave-Seite (= Datensenke, zum Beispiel Applikationsprozessor und/oder Anzeigeeinheit) exemplarisch veranschaulicht. Hierbei steht in der bidirektionalen Multiple-Data-Lane-Konfiguration gemäß Fig. 5B die Abkürzung PPI für PHY Protocol Interface.

Wie in diesem Zusammenhang aus Fig. 5A ersichtlich ist, werden pro angeschlossenem Display oder pro angeschlossener Kamera bis zu zehn Kupferleitungen zur Datenübertragung benötigt (zum Beispiel viermal zwei Datenleitungen und einmal zwei Taktleitungen). Dementsprechend weisen zum Beispiel hochauflösende Bildschirme, Fernseher oder Kameras eine elektrische M[obile]I[ndustry]P[rocessor]I[nterface]-D-PHY-Datenübertragungsschnittstelle auf.

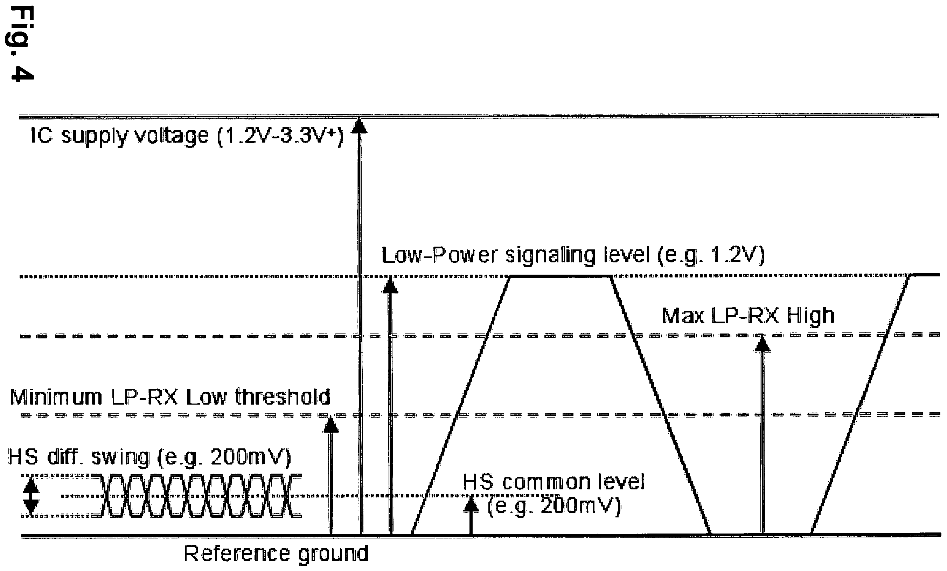

Über diese Schnittstelle werden sowohl H[igh]S[peed]-Daten als auch L[ow]P[ower]-Daten übertragen, wobei die Datenrate der LP-Daten typischerweise sehr viel geringer als die Datenrate der HS-Daten ist. Dies ist anhand Fig. 4 veranschaulicht, in der die jeweiligen Spannungspegel bei HS-Datenübertragung und bei LP-Datenübertragung gezeigt sind.

Die elektrische Verbindung zwischen der D-PHY-Datenübertragungsschnittstelle der Datenquelle und der D-PHY-Datenübertragungsschnittstelle der Datensenke kann galvanisch mittels Kupferkabeln bzw. elektrischen Leitungen auf Leiterplatten hergestellt werden, wobei die D-PHY-HS-Signale einer D-PHY-Datenverbindung pro differentiellem Aderpaar eines Kupferkabels Datenübertragungsraten von mehreren Gigabit pro Sekunde unterstützen können sollen, wie bereits oben erwähnt.

Dies bedingt, dass sehr hochwertige und mithin kostspielige Kupferkabel benutzt werden müssen, wenn zwischen der Datenquelle und der Datensenke längere Distanzen zu überwinden sind. Eine Alternative zu derartigen hochwertigen und kostspieligen Kupferkabeln stellt die serialisierte optische Signalübertragung über optischen Wellenleiter, insbesondere über Glasfaser oder über Plastikfaser, dar.

Über diese serielle Schnittstelle können auch LP-Daten übertragen werden, zum Beispiel durch Hinzufügen der LP-Daten zum Eingang eines Multiplexers, der auch die HS-Daten für die serielle Übertragung bündelt.

Steht dann allerdings für die Übertragung der LP-Daten nur die serielle Übertragung zur Verfügung, so wird die Möglichkeit verloren, insbesondere statische LP-Daten nicht ohne Leistungsverbrauch zu übertragen. Der Leistungsverbrauch ist durch die Aktivität des Multiplexers bzw. des Demuliplexers zur Realisierung der seriellen Datenübertragung bestimmt.

*In der vom 3. März 2011 datierenden Informationsschrift "World's first MIPI® D-PHY optical bridge IC for mobile phones" der Firma "Silicon Line GmbH", München, ist ein integrierter Baustein mit der Typenbezeichnung SL83014 angekündigt, ein Brückenschaltkreis, der auf Mobiltelefone abzielt, die den aktuellen D-PHY-Standard der MIPI*®*-Vereinigung nutzen. Der Schaltkreis soll dazu genutzt werden, Anzeigeschirme, Kameras und Anwendungsprozessoren optisch zu verbinden. Der Schaltkreis akzeptiert bis zu vier Datenpfade, sogenannte data lanes, sowie einen Taktpfad (clock lane) und serialisiert die Daten zur Übertragung über eine optische Hochgeschwindigkeitsverbindung. Sowohl sogenannte HS-(Hochgeschwindigkeit, von 80 Mbps bis 1 Gbps) als auch LP- (niedrige Leistung, bis zu 10 Mbps) Vorwärts-Datenübertragungs-Betriebsarten werden unterstützt. Der SL83014 schließt als optionales Merkmal eine galvanische Verbindung ein, die für eine bidirektionale LP-Datenübertragung genutzt werden kann.*

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, eine Schaltungsanordnung der eingangs genannten Art sowie ein Verfahren der eingangs genannten Art so weiterzuentwickeln, dass bei Übertragung von L[ow]P[ower]-Daten die erforderliche Leistungsaufnahme möglichst gering ist.

Diese Aufgabe wird durch eine Schaltungsanordnung mit den Merkmalen des Anspruchs 1 sowie durch ein Verfahren mit den Merkmalen des Anspruchs 11 gelöst. Vorteilhafte Ausgestaltungen und zweckmäßige Weiterbildungen der vorliegenden Erfindung sind in den jeweiligen Unteransprüchen gekennzeichnet.

Erfindungsgemäß werden also eine Schaltungsanordnung sowie ein Verfahren vorgeschlagen, mittels derer
- die single-ended, auf Logikpegeln basierenden Signalen entsprechenden H[igh]S[peed]-Daten und
- die differentiellen, insbesondere auf common mode basierenden, Signalen entsprechenden L[ow]P[ower]-Daten
zu einem gemeinsamen Signalstrom serialisiert werden.

Hierbei besteht die Lösung des Konflikts zwischen der Leistungsaufnahme durch Serialisierung einerseits und der möglichst niedrigen Leistungsaufnahme bei ausschließlicher Übertragung von L[ow]P[ower]-Daten andererseits erfindungsgemäß im modusabhängigen Einsatz eines von zwei verfügbaren Übertragungswegen:
- in einem ersten Modus werden sowohl die single-ended, auf Logikpegeln basierenden Signalen entsprechenden H[igh]S[peed]-Daten als auch die differentiellen, insbesondere auf common mode basierenden, Signalen entsprechenden L[ow]P[ower]-Daten von n Kanälen oder von n Lanes in einem gemeinsamen seriellen Signalstrom gebündelt übertragen;
- in einem zweiten Modus werden ausschließlich die den differentiellen, insbesondere auf common mode basierenden, Signalen entsprechenden L[ow]P[ower]-Daten eines Kanals oder einer Lane auf einer elektrischen oder galvanischen Verbindung übertragen.

Bei einer derartigen Übertragungsstrecke mit gemeinsamem serialisiertem Signalstrom werden die H[igh]S[peed]-/L[ow]P[ower]-Daten durch mindestens einen im Wesentlichen mindestens einen Multiplexer aufweisenden Senderbaustein (= Sendeanordnung) gebündelt und als gemeinsamer serieller Signalstrom an einen Empfängerbaustein (= Empfangsanordnung) übertragen.

Diese im Wesentlichen mindestens einen Demultiplexer aufweisende Empfangsanordnung entbündelt die seriellen Daten und gibt sie in ursprünglicher Form wieder als H[igh]S[peed]-/L[ow]P[ower]-Daten aus. Der an der Sendeanordnung anliegende CL[oc]K dient als Taktreferenz für den Multiplexer und wird im gemeinsamen seriellen Signalstrom eingebettet. Die Empfangsanordnung regeneriert diesen Takt und gibt ihn als CL[oc]K wieder aus.

Sollen nun vorübergehend oder andauernd nur auf einem der Kanäle (= auf einer der Lanes) ausschließlich L[ow]P[ower]-Daten übertragen werden, so werden die entsprechenden Eingänge der Sendeanordnung und die entsprechenden Ausgänge der Empfangsanordnung durch jeweils mindestens einen Schalter mit anderen Anschlüssen der Sendeanordnung bzw. der Empfangsanordnung verbunden. Diese Anschlüsse werden untereinander wiederum mit einer galvanischen Verbindung, insbesondere mit einem Kupferkabel und/oder mit einer, zum Beispiel auf mindestens einer Leiterplatte angeordneten, elektrischen Leitung, verbunden.

Durch die vorliegende Erfindung können im laufenden Betrieb, bei dem die fragliche Lane abwechselnd im H[igh]S[peed]-Modus oder im L[ow]P[ower]-Modus arbeitet, sowohl die serialisierte, mit Leistungsaufnahme verbundene Signalübertragung als auch die praktisch leistungslose Signalübertragung gleitend ineinander überführt werden,
- ohne dass weitere besondere Maßnahmen ergriffen werden müssen und
- ohne dass dies zu einer Beeinträchtigung des laufenden Signalverkehrs führen würde.

Die vorliegende Erfindung ermöglicht also die leistungslose Übertragung von L[ow]P[ower]-Daten unter Umgehung der normalerweise benutzten, mit elektrischer Leistungsaufnahme verbundenen Serialisierung.

Hierbei weist die serielle Datenübertragung oft den Nachteil auf, dass die Daten nur in eine Richtung übertragen werden können. Bei der vorgestellten Lösung gemäß der vorliegenden Erfindung können die L[ow]P[ower]-Daten für einen Kanal oder für eine Lane auch bidirektional (simplex), insbesondere entsprechend der M[obile]I[ndustry]P[rocessor]I[nterface]-D-PHY-Spezifikation, übertragen werden.

Die erfindungsgemäße Schaltungsanordnung sowie das erfindungsgemäße Verfahren erlauben auch das gleichzeitige Übertragen bidirektionaler L[ow]P[ower]-Daten einer Lane zusammen mit dem unidirektionalen Übertragen von H[igh]S[peed]-Daten und L[ow]P[ower]-Daten der anderen Lanes, letztere gebündelt über die serielle Datenverbindung.

Exemplarisch lässt sich die vorliegende Erfindung beim seriellen und/oder gebündelten, insbesondere CSI-protokollbasierten und/oder CSI-2-protokollbasierten und/oder CSI-3-protokollbasierten und/oder DSI-protokollbasierten und/oder DSI-2-protokollbasierten, unidirektionalen oder bidirektionalen Übertragen sowohl von single-ended, auf Logikpegeln basierenden Daten- und Taktsignalen als auch von differentiellen, insbesondere auf common mode basierenden, Daten- und Taktsignalen, insbesondere von D-PHY-Datensignalen und D-PHY-Taktsignalen, zum Beispiel von bis zu vier Bit breiten MIPI-D-PHY-Datensignalen und MIPI-D-PHY-Taktsignalen, zwischen mindestens einer Datenquelle, insbesondere mindestens einer, zum Beispiel hochauflösenden und/oder zum Beispiel als Bildquelle fungierenden, Kamera und/oder mindestens einem Applikationsprozessor, und mindestens einer Datensenke, insbesondere mindestens einem Applikationsprozessor und/oder mindestens einer, zum Beispiel hochauflösenden und/oder zum Beispiel als Bildsenke fungierenden, Anzeigeeinheit, zum Beispiel mindestens einem Display oder mindestens einem Monitor, anwenden.

### Kurze Beschreibung der Zeichnungen

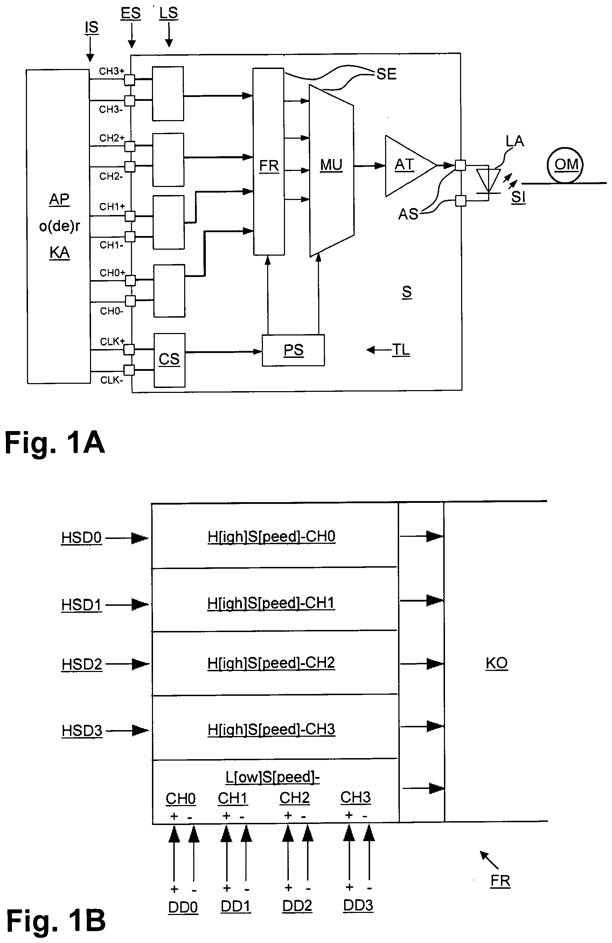

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 11 nachgeordneten Ansprüche verwiesen, andererseits werden weitere Ausgestaltungen, Merkmale und Vorteile der vorliegenden Erfindung nachstehend unter Anderem anhand der durch Fig. 1A bis Fig. 4 veranschaulichten Ausführungsbeispiele näher erläutert.

Es zeigt:
- Fig. 1A: in konzeptuell-schematischer Darstellung ein Ausführungsbeispiel der Sendeanordnung gemäß der vorliegenden Erfindung, die nach dem Verfahren gemäß der vorliegenden Erfindung arbeitet;
- Fig. 1B: in konzeptuell-schematischer Detaildarstellung ein Ausführungsbeispiel des Framers der Sendeanordnung aus Fig. 1A;
- Fig. 2A: in konzeptuell-schematischer Darstellung ein Ausführungsbeispiel der der Sendeanordnung aus Fig. 1A zugeordneten Empfangsanordnung, die nach dem Verfahren gemäß der vorliegenden Erfindung arbeitet;
- Fig. 2B: in konzeptuell-schematischer Detaildarstellung ein Ausführungsbeispiel des Deframers der Empfangsanordnung aus Fig. 2A;
- Fig. 3: in konzeptuell-schematischer Darstellung ein Ausführungsbeispiel der Schaltungsanordnung gemäß der vorliegenden Erfindung, die nach dem Verfahren gemäß der vorliegenden Erfindung arbeitet;
- Fig. 4: in diagrammatischer Darstellung ein Ausführungsbeispiel der jeweiligen Spannungspegel bei H[igh]S[peed]-Datenübertragung und bei L[ow]P[ower]-Datenübertragung;
- Fig. 5A: in konzeptuell-schematischer Darstellung ein Beispiel einer Anordnung aus dem Stand der Technik; und
- Fig. 5B: in konzeptuell-schematischer Darstellung ein Beispiel einer der Anordnung aus Fig. 5A zugrunde liegenden Schnittstellenkonfiguration mit zwei Datenkanälen und mit einer Taktleitung.

Gleiche oder ähnliche Ausgestaltungen, Elemente oder Merkmale sind in Fig. 1A bis Fig. 5B mit identischen Bezugszeichen versehen.

### Bester Weg zur Ausführung der vorliegenden Erfindung

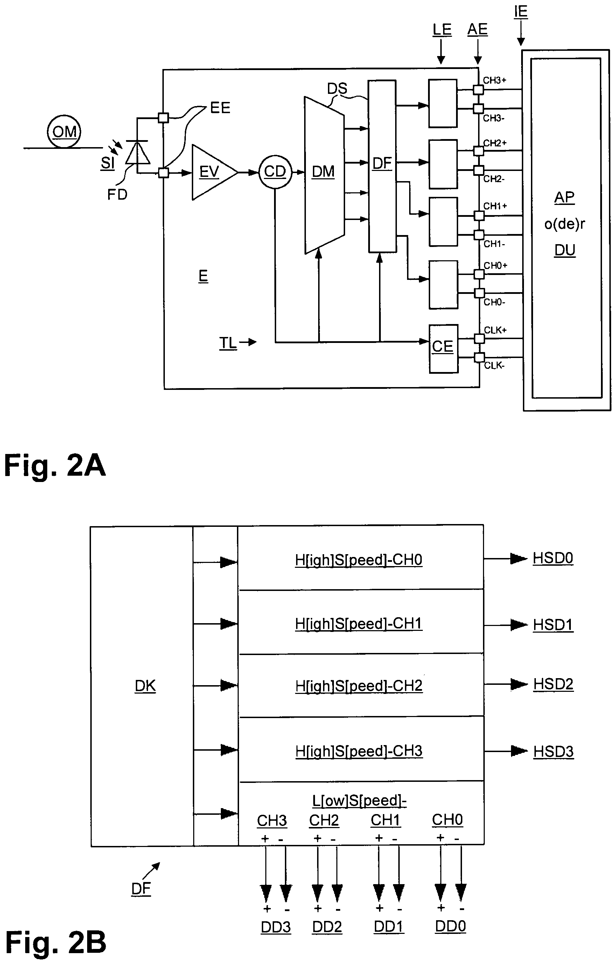

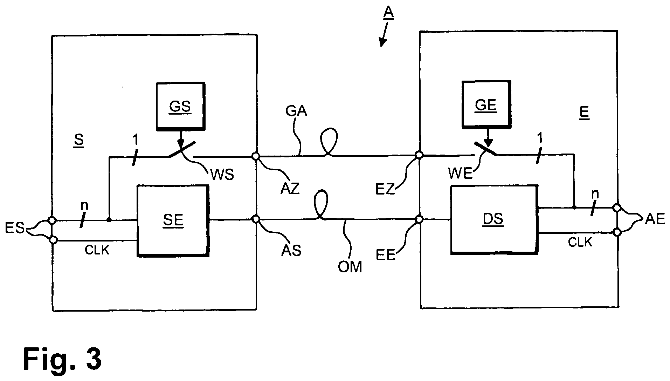

- Mittels des anhand Fig. 1A veranschaulichten Ausführungsbeispiels einer Sendeanordnung S gemäß der vorliegenden Erfindung und
- mittels des anhand Fig. 2A veranschaulichten Ausführungsbeispiels einer Empfangsanordnung E gemäß der vorliegenden Erfindung,
durch die zusammen ein Ausführungsbeispiel einer Schaltungsanordnung A (vgl. Fig. 3) gemäß der vorliegenden Erfindung gebildet wird (im Rahmen der vorliegenden Erfindung ist es möglich, die Sendeanordnung S und die Empfangsanordnung E unabhängig voneinander zu realisieren und zu betreiben), ist es grundsätzlich möglich, eine kabelbasierte Verbindung wahlweise
- gemultiplext und mithin serialisiert auf optischer Basis, insbesondere auf Basis mindestens eines optischen Mediums, zum Beispiel auf Basis mindestens eines optischen Wellenleiters OM (vgl. hierzu im Detail Fig. 1A, Fig. 2A), wie etwa auf Basis mindestens einer Glasfaser und/oder auf Basis mindestens einer Plastikfaser, und/oder
- nicht gemultiplext auf elektrischer oder galvanischer Basis, insbesondere auf Basis mindestens einer elektrischen oder galvanischen Verbindung GA (vgl. Fig. 3), zum Beispiel auf Basis mindestens eines Kupferkabels und/oder auf Basis mindestens einer, etwa auf mindestens einer Leiterplatte angeordneten, elektrischen Leitung,
zu realisieren und zu betreiben.

Fig. 1A zeigt ein Ausführungsbeispiel für den prinzipiellen Aufbau einer Sendeanordnung S zum Anschluss an eine D[isplay]S[erial]I[nterface]-Datenübertragungsschnittstelle IS oder auch an eine C[amera]S[erial]I[nterface]-Datenübertragungsschnittstelle IS.

Die im Applikationsprozessor AP oder in der Kamera KA generierten Bilddaten werden auf vier Datenleitungen oder Kanälen CH0+, CH0-, CH1+, CH1-, CH2+, CH2-, CH3+, CH3- als D-PHY-Signale an der bis zu vier Bit breiten Datenübertragungsschnittstelle IS zusammen mit D-PHY-korrekten Taktsignalen CLK+, CLK- zur Verfügung gestellt.

Die Sendeanordnung S nimmt diese Signale an einer integrierten Interface-Logik LS auf, deren Blöcke jeweils mindestens einen Zustandsautomaten zur richtigen Interpretation der D-PHY-Logiksignale und zur Unterscheidung zwischen hochfrequenten Datenströmen (sogenannten H[igh]S[peed]-Daten, die single-ended, auf Logikpegeln basierenden Signalen entsprechen) und niederfrequenten Datenströmen (sogenannten L[ow]P[ower]-Daten, die differentiellen, insbesondere auf common mode basierenden, Signalen entsprechen) aufweisen können.

Ein in der Sendeanordnung S folgender Framer FR (vgl. hierzu detaillierter Fig. 1B) stellt die D[irect]C[urrent]-Balancierung des Eingangssignals sicher und erzeugt einen auf der Empfangsseite (vgl. Fig. 2A) wiedererkennbaren Rahmen, der es der Empfangsanordnung E (vgl. Fig. 2A) ermöglicht, die empfangenen Daten den richtigen Ausgangsdatenleitungen oder Ausgangskanälen CH0+, CH0-, CH1+, CH1-, CH2+, CH2-, CH3+, CH3- wieder zuzuordnen.

Im Detail kann der Framer FR gemäß Fig. 1B sowohl mit den single-ended, auf Logikpegeln basierenden Datensignalen HSD0, HSD1, HSD2, HSD3 als auch mit den differentiellen Datensignalen DD0+, DD0-, DD1+, DD1-, DD2+, DD2-, DD3+, DD3- beaufschlagt werden. Mittels seines als 5b/6b-Kodierblock ausgebildeten Kodierers KO bettet der Framer FR gemäß Fig. 1B diese differentiellen Datensignale DD0+, DD0-, DD1+, DD1-, DD2+, DD2-, DD3+, DD3- in den Strom der single-ended, auf Logikpegeln basierenden Datensignale HSD0, HSD1, HSD2, HSD3 ein.

Ein sich dem Framer FR anschließender Multiplexer MU, insbesondere H[igh]S[peed]-Mux, erzeugt mit Hilfe eines als Phase-Locked-Loop, insbesondere als C[lock]M[ultiplier]U[nit], ausgebildeten Taktgenerators PS das hochfrequente serielle oder gebündelte Sendesignal, das dem Ausgang AS der Sendeanordnung S mittels eines Ausgangstreiber AT zur Verfügung gestellt wird. Der Framer FR und der Multiplexer MU bilden zusammen den Serialisierer SE.

Hierbei dient das über den Taktport CLK+, CLK- und über das Taktmodul CS der Interface-Logik LS mittels des Taktgenerators PS bereit gestellte D-PHY-Taktsignal als (Takt-)Referenz für den Serialisierer SE, insbesondere für dessen Multiplexer MU, und wird im seriellen Datenstrom, also im serialisierten Ausgangssignal eingebettet. Hierdurch entsteht der gemeinsame Signalstrom SI, der an die Empfangsanordnung E (vgl. Fig. 2A) übermittelt wird.

Wie der Darstellung gemäß Fig. 1A des Weiteren entnehmbar ist, ist der Ausgangstreiber AT als integrierter Lasertreiber zur Ansteuerung mindestens eines direkt angeschlossenen Lasers LA, insbesondere zur Ansteuerung mindestens einer direkt angeschlossener V[ertical]C[avity]S[urface]E[mitting]L[aserdiode], ausgeführt.

Fig. 2A zeigt ein Ausführungsbeispiel für den prinzipiellen Aufbau der Empfangsanordnung E zum Anschluss an eine D[isplay]S[erial]I[nterface]-Datenübertragungsschnittstelle IE oder auch an eine C[amera]S[erial]I[nterface]-Datenübertragungsschnittstelle IE.

Die von der Sendeanordnung S (vgl. Fig. 1A) ausgesandten seriellen oder gebündelten Daten werden über einen Eingangsverstärker EV der Empfangsanordnung E aufgenommen und einer integrierten Takt- und Datenrückgewinnung CD zugeführt.

Diese integrierte Takt- und Datenrückgewinnung CD regeneriert aus dem gemeinsamen Signalstrom SI den ursprünglichen D-PHY-Takt, der über das Taktmodul CE der Interface-Logik LE direkt dem D[isplay]S[erial]I[nterface] oder dem C[amera]S[erial]I[nterface] wieder zur Verfügung gestellt wird. Der verbleibende serielle Datenstrom wird über einen Demultiplexer DM entbündelt sowie parallelisiert und an einen Deframer DF (vgl. hierzu detaillierter Fig. 2B) übergeben, der grundsätzlich spiegelbildlich zum Framer FR gemäß Fig. 1B aufgebaut ist. Der Demultiplexer DM und der Deframer DF bilden zusammen den Deserialisierer DS.

Im Detail kann der Deframer FR gemäß Fig. 2B mittels seines als 6b/5b-Dekodierblock ausgebildeten Dekodierers DK die differentiellen Datensignale DD0+, DD0-, DD1+, DD1-, DD2+, DD2-, DD3+, DD3- von den single-ended, auf Logikpegeln basierenden Datensignalen HSD0, HSD1, HSD2, HSD3 separieren und die reparallelisierten Datensignale den jeweils zutreffenden Datenleitungen CH0+, CH0-, CH1+, CH1-, CH2+, CH2-, CH3+, CH3- wieder zuordnen.

Die in der Empfangsanordnung E dargestellten Interface-Logik-Blöcke LE können jeweils mindestens einen Zustandsautomaten zur richtigen Interpretation der D-PHY-Logiksignale und zur Unterscheidung zwischen hochfrequenten Datenströmen und niederfrequenten Datenströmen aufweisen.

Wie der Darstellung gemäß Fig. 2A des Weiteren entnehmbar ist, ist der Eingangsverstärker EV als integrierter Transimpedanzverstärker ausgeführt, der es ermöglicht, eine Fotodiode FD direkt an die Empfangsanordnung E anzuschließen.

Auf diese Weise ist es bei der Schaltungsanordnung A (vgl. Fig. 3) gemäß der vorliegenden Erfindung möglich, die kabelbasierte gemultiplexte Verbindung zwischen der Sendeanordnung S (vgl. Fig. 1A) und der Empfangsanordnung E (vgl. Fig. 2A) auf optischer Basis, nämlich mittels eines, zum Beispiel in Form einer Glasfaser und/oder in Form einer Plastikfaser ausgebildeten, optischen Wellenleiters OM zu realisieren und zu betreiben.

Fig. 3 stellt ein Ausführungsbeispiel für die Zusammenschau der Sendeanordnung S (vgl. Fig. 1A) und der Empfangsanordnung E (vgl. Fig. 2A) dar. Es handelt sich um eine D-PHY-Übertragungsstrecke mit serieller Verbindung bzw. mit serialisiertem Datenstrom.

Hierzu werden die D-PHY-H[igh]S[peed]/L[ow]P[ower]-Daten durch die im Wesentlichen den Serialisierer SE, und hierbei insbesondere den Multiplexer MU, aufweisende Sendeanordnung S (vgl. Fig. 1A) gebündelt und als serieller Datenstrom an die Empfangsanordnung E (vgl. Fig. 2A) übertragen.

Diese im Wesentlichen den Deserialisierer DS, und hierbei insbesondere den Demultiplexer DM, aufweisende Empfangsanordnung E (vgl. Fig. 2A) entbündelt die seriellen Daten und gibt sie in ursprünglicher Form wieder als D-PHY-H[igh]S[peed]/L[ow]P[ower]-Daten aus. Der an der Sendeanordnung S (vgl. Fig. 1A) anliegende D-PHY-CL[oc]K dient als Taktreferenz für den Serialisierer SE und wird im seriellen Datenstrom eingebettet. Die Empfangsanordnung E (vgl. Fig. 2A) regeneriert diesen Takt und gibt ihn als D-PHY-CL[oc]K wieder aus.

Sollen nun vorübergehend oder auch dauerhaft auf nur einer der n D-PHY-Verbindungen oder D-PHY-Lanes ausschließlich L[ow]P[ower]-Daten übertragen werden, so können die entsprechenden Eingänge ES der Sendeanordnung S (vgl. Fig. 1A) durch mindestens einen, insbesondere von mindestens einem Logikmodul GS beaufschlagten, Schalter WS (in Fig. 1A lediglich aus Gründen der Übersichtlichkeit der Darstellung nicht gezeigt) mit einem anderen oder weiteren Anschluss AZ der Sendeanordnung S (vgl. Fig. 1A) verbunden werden.

In entsprechender Weise können die Ausgänge AE der Empfangsanordnung E (vgl. Fig. 2A) durch mindestens einen, insbesondere von mindestens einem Logikmodul GE beaufschlagten, Schalter WE (in Fig. 2A lediglich aus Gründen der Übersichtlichkeit der Darstellung nicht gezeigt) mit einem anderen oder weiteren Anschluss EZ der Empfangsanordnung E (vgl. Fig. 2A) verbunden werden.

Dieser sendeseitige Anschluss AZ und dieser empfangsseitige Anschluss EZ werden untereinander mittels mindestens einer elektrischen oder galvanischen Verbindung GA, insbesondere mittels mindestens eines ein Bit breiten Kupferkabels oder mittels mindestens einer, zum Beispiel auf mindestens einer Leiterplatte angeordneten, elektrischen Leitung, verbunden.

Mittels dieser technischen Maßnahme kann der Konflikt zwischen der unvermeidlichen Leistungsaufnahme durch anhand Fig. 1A bis Fig. 2B veranschaulichte Serialisierung einerseits und dem Streben nach möglichst niedriger Leistungsaufnahme bei ausschließlicher Übertragung von L[ow]P[ower]-Daten andererseits gelöst werden, nämlich mittels des modusabhängigen Einsatzes von einem der zwei verfügbaren Übertragungswege:
- im ersten Modus werden sowohl die H[igh]S[peed]-Daten als auch die L[ow]P[ower]-Daten der n Kanäle oder der n Lanes gemäß Fig. 1A bis Fig. 2B auf optischer Basis, nämlich auf dem, zum Beispiel in Form einer Glasfaser und/oder in Form einer Plastikfaser ausgebildeten, optischen Wellenleiters OM in einem gemeinsamen seriellen Signalstrom SI gebündelt übertragen;
- im zweiten Modus werden ausschließlich die L[ow]P[ower]-Daten eines Kanals oder einer Lane auf der elektrischen oder galvanischen Verbindung GA übertragen.

Hierdurch können im laufenden Betrieb, bei dem die fragliche Lane abwechselnd im H[igh]S[peed]-Modus oder im L[ow]P[ower]-Modus arbeitet, sowohl die serialisierte, mit Leistungsaufnahme verbundene Signalübertragung auf dem optischen Wellenleiter OM als auch die praktisch leistungslose Signalübertragung auf der elektrischen oder galvanischen Verbindung GA gleitend ineinander überführt werden,
- ohne dass weitere besondere Maßnahmen ergriffen werden müssen und
- ohne dass dies zu einer Beeinträchtigung des laufenden Signalverkehrs führen würde.

Auf diese Weise kann gemäß Fig. 3 im Falle von ausschließlicher L[ow]P[ower]-Datenübertragung über nur einen Kanal (= über nur eine Lane) und von Stopp-Status auf den anderen n Kanälen (= auf den anderen n Lanes) von geringster Leistungsaufnahme profitiert werden.

### Bezugszeichenliste

- A: Schaltungsanordnung
- E: Empfangsanordnung
- S: Sendeanordnung
- AE: Ausgang der Empfangsanordnung E
- AP: Applikationsprozessor
- AS: Ausgang der Sendeanordnung S
- AT: Ausgangstreiber, insbesondere Lasertreiber
- AZ: anderer oder weiterer oder zusätzlicher Ausgang der Sendeanordnung S
- CD: Takt- und Datenrückgewinnungseinheit
- CE: Taktmodul der Empfangs-Schnittstellen-Logik LE
- CH0±: erste Datenleitung oder erster Kanal
- CH1±: zweite Datenleitung oder zweiter Kanal
- CH2±: dritte Datenleitung oder dritter Kanal
- CH3±: vierte Datenleitung oder vierter Kanal
- CLK±: Taktleitung oder Taktkanal
- CS: Taktmodul der Sende-Schnittstellen-Logik LS
- DD0±: differentielles, insbesondere auf common mode basierendes, Datensignal auf erster Datenleitung oder erstem Kanal CH0±
- DD1±: differentielles, insbesondere auf common mode basierendes, Datensignal auf zweiter Datenleitung oder zweitem Kanal CH1±
- DD2±: differentielles, insbesondere auf common mode basierendes, Datensignal auf dritter Datenleitung oder drittem Kanal CH2±
- DD3±: differentielles, insbesondere auf common mode basierendes, Datensignal auf vierter Datenleitung oder viertem Kanal CH3±
- DF: Deframer
- DK: Dekodierer, insbesondere 6b/5b-Dekodierblock, des Deframers DF
- DM: Demultiplexer
- DS: Deserialisierungselement oder Deserialisierer
- DU: Anzeigeeinheit
- EE: Eingang der Empfangsanordnung E
- ES: Eingang der Sendeanordnung S
- EV: Eingangsverstärker, insbesondere Transimpedanzverstärker
- EZ: anderer oder weiterer oder zusätzlicher Eingang der Empfangsanordnung E
- FD: Fotodiode
- FR: Framer
- GA: elektrische oder galvanische Verbindung, insbesondere Kupferkabel oder, zum Beispiel auf Leiterplatte angeordnete, elektrische Leitung
- GE: Logikmodul der Empfangsanordnung E
- GS: Logikmodul der Sendeanordnung S
- HS: High Speed
- HSD0: single-ended, auf Logikpegeln basierendes Datensignal auf erster Datenleitung oder erstem Kanal CH0±
- HSD1: single-ended, auf Logikpegeln basierendes Datensignal auf zweiter Datenleitung oder zweitem Kanal CH1±
- HSD2: single-ended, auf Logikpegeln basierendes Datensignal auf dritter Datenleitung oder drittem Kanal CH2±
- HSD3: single-ended, auf Logikpegeln basierendes Datensignal auf vierter Datenleitung oder viertem Kanal CH3±
- IE: datensenkenbezogene CSI- und/oder CSI-2- und/oder CSI-3- und/oder DSI-und/oder DSI-2-Schnittstelle
- IS: datenquellenbezogene CSI- und/oder CSI-2- und/oder CSI-3- und/oder DSI-und/oder DSI-2-Schnittstelle
- KA: Kamera
- KO: Kodierer, insbesondere 5b/6b-Kodierblock, des Framers FR
- LA: Laser
- LE: Empfangs-Schnittstellen-Logik
- LP: Low Power
- LS: Sende-Schnittstellen-Logik
- MU: Multiplexer
- OM: optisches Medium, insbesondere optischer Wellenleiter, zum Beispiel Glasfaser und/oder Plastikfaser
- PS: Taktgenerator, insbesondere Phase-Locked-Loop, zum Beispiel Clock Multiplier Unit
- SE: Serialisierungselement oder Serialisierer
- SI: gemeinsamer Signalstrom
- TL: Taktleitung
- WE: Schalter der Empfangsanordnung E
- WS: Schalter der Sendeanordnung S

## Patentansprüche

1. Schaltungsanordnung (A) zum Übertragen
- sowohl von single-ended, auf Logikpegeln basierenden Daten- und Taktsignalen (HS)
- als auch von differentiellen, auf common mode basierenden Daten- und Taktsignalen (LP)
zwischen mindestens einer mindestens einer Datenquelle zuordbaren Sendeanordnung (S) und mindestens einer mindestens einer Datensenke zuordbaren Empfangsanordnung (E)
- in Form mindestens eines die single-ended, auf Logikpegeln basierenden Daten- sowie Taktsignale (HS) und die differentiellen Daten- sowie Taktsignale (LP) serialisierenden gemeinsamen Signalstroms (SI) und
- in Form mindestens eines die differentiellen Daten- und Taktsignale (LP) aufweisenden Signalstroms,
**dadurch gekennzeichnet, dass**
- in einem ersten Modus der gemeinsame Signalstrom (SI) über mindestens ein optisches Medium (OM) übertragen wird und
- in einem zweiten Modus der die differentiellen Daten- und Taktsignale (LP) aufweisende Signalstrom über mindestens eine elektrische oder galvanische, ein Bit breite, Verbindung (GA) übertragen wird.

2. Schaltungsanordnung gemäß Anspruch 1, **dadurch gekennzeichnet, dass** das mindestens eine optische Medium (OM) mindestens ein optischer Wellenleiter, insbesondere mindestens eine Glasfaser und/oder mindestens eine Plastikfaser, ist.

3. Schaltungsanordnung gemäß Anspruch 1 oder 2, **dadurch gekennzeichnet, dass** die mindestens eine elektrische oder galvanische Verbindung (GA) mindestens ein Kupferkabel und/oder über mindestens eine, insbesondere auf mindestens einer Leiterplatte angeordnete, elektrische Leitung ist.

4. Schaltungsanordnung gemäß Anspruch 3, **dadurch gekennzeichnet, dass** der elektrischen oder galvanischen Verbindung (GA)
- in der Sendeanordnung (S) mindestens ein, insbesondere mit mindestens einem Logikmodul (GS) versehener, Schalter (WS) zugeordnet ist, mittels dessen die elektrische oder galvanische Verbindung (GA) zur Empfangsanordnung (E) schließbar ist, und
- in der Empfangsanordnung (E) mindestens ein, insbesondere mit mindestens einem Logikmodul (GE) versehener, Schalter (WE) zugeordnet ist, mittels dessen die elektrische oder galvanische Verbindung (GA) zur Sendeanordnung (S) schließbar ist.

5. Schaltungsanordnung gemäß mindestens einem der Ansprüche 1 bis 4, **dadurch gekennzeichnet, dass** die Sendeanordnung (S) aufweist:
- mindestens einen Eingang (ES) für die Datensignale und Taktsignale,
- mindestens eine dem Eingang (ES) nachgeschaltete Sende-Schnittstellen-Logik (LS) zum Aufnehmen der Datensignale und Taktsignale,
- mindestens einen der Sende-Schnittstellen-Logik (LS) nachgeschalteten Serialisierer (SE) zum Erzeugen des gemeinsamen Signalstroms (SI),
- mindestens einen mindestens einem Taktmodul (CS) der Sende-Schnittstellen-Logik (LS) nachgeschalteten, dem Serialisierer (SE) vorgeschalteten und zum Erzeugen mindestens eines Referenztakts vorgesehenen Taktgenerator (PS), insbesondere Phase-Locked-Loop, zum Beispiel Clock Multiplier Unit,
- mindestens einen dem Serialisierer (SE) nachgeschalteten Ausgangstreiber (AT) und
- mindestens einen dem Ausgangstreiber (AT) nachgeschalteten Ausgang (AS) zum Übertragen des gemeinsamen Signalstroms (SI) an die Empfangsanordnung (E).

6. Schaltungsanordnung gemäß Anspruch 5, **dadurch gekennzeichnet, dass** der Serialisierer (SE) aufweist:
- mindestens einen der Sende-Schnittstellen-Logik (LS) nachgeschalteten Framer (FR) zum Erzeugen mindestens eines in der Empfangsanordnung (E) wiedererkennbaren Rahmens für den gemeinsamen Signalstrom (SI) sowie
- mindestens einen dem Framer (FR) nachgeschalteten Multiplexer (MU) zum Erzeugen des gemeinsamen Signalstroms (SI).

7. Schaltungsanordnung gemäß Anspruch 6, **dadurch gekennzeichnet, dass** der Framer (FR) sowohl mit den single-ended, auf Logikpegeln basierenden Datensignalen (HSDO, HSD1, HSD2, HSD3) als auch mit den differentiellen Datensignalen (DD0+, DD0-, DD1+, DD1-, DD2+, DD2-, DD3+, DD3-) beaufschlagbar ist und mittels mindestens eines Kodierers (KO), insbesondere mittels mindestens eines 5b/6b-Kodierblocks, die differentiellen Datensignale (DD0+, DD0-, DD1+, DD1-, DD2+, DD2-, DD3+, DD3-) in den Strom der single-ended, auf Logikpegeln basierenden Datensignale (HSDO, HSD1, HSD2, HSD3) einbettet.

8. Schaltungsanordnung gemäß mindestens einem der Ansprüche 1 bis 7, **dadurch gekennzeichnet, dass** die Empfangsanordnung (E) aufweist:
- mindestens einen Eingang (EE) für den von der Sendeanordnung (S) übertragenen gemeinsamen Signalstrom (SI),
- mindestens einen Eingangsverstärker (EV) zum Aufnehmen des gemeinsamen Signalstroms (SI),
- mindestens eine Takt- und Datenrückgewinnungseinheit (CD) zum Wiederherstellen der Datensignale und Taktsignale aus dem gemeinsamen Signalstrom (SI),
- mindestens ein der Takt- und Datenrückgewinnungseinheit (CD) nachgeschaltetes Taktmodul (CE) mindestens einer Empfangs-Schnittstellen-Logik (LE),
- mindestens einen der Takt- und Datenrückgewinnungseinheit (CD) nachgeschalteten Deserialisierer (DS) zum Reparallelisieren der Datensignale und zum Zuordnen der reparallelisierten Datensignale auf die Empfangs-Schnittstellen-Logik (LE) und
- mindestens einen der Empfangs-Schnittstellen-Logik (LE) nachgeschalteten Ausgang (AE) für die Datensignale und Taktsignale.

9. Schaltungsanordnung gemäß Anspruch 8, **dadurch gekennzeichnet, dass** der Deserialisierer (DS) aufweist:
- mindestens einen der Takt- und Datenrückgewinnungseinheit (CD) nachgeschalteten Demultiplexer (DM) zum Reparallelisieren der Datensignale sowie
- mindestens einen dem Demultiplexer (DM) nachgeschalteten Deframer (DF) zum Zuordnen der reparallelisierten Datensignale auf die Empfangs-Schnittstellen-Logik (LE).

10. Schaltungsanordnung gemäß Anspruch 9, **dadurch gekennzeichnet, dass** der Deframer (DF) mittels mindestens eines Dekodierers (DK), insbesondere mittels mindestens eines 6b/5b-Dekodierblocks, die differentiellen Datensignale (DD0+, DD0-, DD1+, DD1-, DD2+, DD2-, DD3+, DD3-) von den single-ended, auf Logikpegeln basierenden Datensignalen (HSDO, HSD1, HSD2, HSD3) separiert und die reparallelisierten Datensignale den jeweiligen Datenleitungen (CH0+, CH0-, CH1+, CH1-, CH2+, CH2-, CH3+, CH3-) zuordnet.

11. Verfahren zum Übertragen
- sowohl von single-ended, auf Logikpegeln basierenden Daten- und Taktsignalen (HS)
- als auch von differentiellen, auf common mode basierenden Daten- und Taktsignalen (LP)
zwischen mindestens einer mindestens einer Datenquelle zuordbaren Sendeanordnung (S) und mindestens einer mindestens einer Datensenke zuordbaren Empfangsanordnung (E)
- in Form mindestens eines die single-ended, auf Logikpegeln basierenden Daten- sowie Taktsignale (HS) und die differentiellen Daten- sowie Taktsignale (LP) serialisierenden gemeinsamen Signalstroms (SI) und
- in Form mindestens eines die differentiellen Daten- und Taktsignale (LP) aufweisenden Signalstroms,
**dadurch gekennzeichnet, dass**
- in einem ersten Modus der gemeinsame Signalstrom (SI) über mindestens ein optisches Medium (OM) übertragen wird und
- in einem zweiten Modus der die differentiellen Daten- und Taktsignale (LP) aufweisende Signalstrom über mindestens eine elektrische oder galvanische, ein Bit breite, Verbindung (GA) übertragen wird.

12. Verfahren gemäß Anspruch 11, **dadurch gekennzeichnet, dass** das mindestens eine optische Medium (OM) mindestens ein optischer Wellenleiter, insbesondere mindestens eine Glasfaser und/oder mindestens eine Plastikfaser, ist.

13. Verfahren gemäß Anspruch 11 oder 12, **dadurch gekennzeichnet, dass** die mindestens eine elektrische oder galvanische Verbindung (GA) mindestens ein Kupferkabel und/oder über mindestens eine, insbesondere auf mindestens einer Leiterplatte angeordnete, elektrische Leitung ist.

14. Verfahren gemäß Anspruch 13, **dadurch gekennzeichnet, dass** die elektrische oder galvanische Verbindung (GA)
- zur Empfangsanordnung (E) hin in der Sendeanordnung (S) mittels mindestens eines, insbesondere von mindestens einem Logikmodul (GS) beaufschlagten, Schalters (WS) geschlossen wird und
- zur Sendeanordnung (S) hin in der Empfangsanordnung (E) mittels mindestens eines, insbesondere von mindestens einem Logikmodul (GE) beaufschlagten, Schalters (WE) geschlossen wird.

15. Verfahren gemäß mindestens einem der Ansprüche 11 bis 14 und/oder Verwendung mindestens einer Schaltungsanordnung (A) gemäß mindestens einem der Ansprüche 1 bis 10 beim seriellen und/oder gebündelten, insbesondere CSI-protokollbasierten und/oder CSI-2-protokollbasierten und/oder CSI-3-protokollbasierten und/oder DSI-protokollbasierten und/oder DSI-2-protokollbasierten, unidirektionalen oder bidirektionalen Übertragen sowohl von single-ended, auf Logikpegeln basierenden Daten- und Taktsignalen (HS) als auch von differentiellen, insbesondere auf common mode basierenden, Daten- und Taktsignalen (LP), insbesondere von D-PHY-Datensignalen und D-PHY-Taktsignalen, zum Beispiel von bis zu vier Bit breiten MIPI-D-PHY-Datensignalen und MIPI-D-PHY-Taktsignalen, zwischen mindestens einer Datenquelle, insbesondere mindestens einer, zum Beispiel hochauflösenden und/oder zum Beispiel als Bildquelle fungierenden, Kamera (KA) und/oder mindestens einem Applikationsprozessor (AP), und mindestens einer Datensenke, insbesondere mindestens einem Applikationsprozessor (AP) und/oder mindestens einer, zum Beispiel hochauflösenden und/oder zum Beispiel als Bildsenke fungierenden, Anzeigeeinheit (DU), zum Beispiel mindestens einem Display oder mindestens einem Monitor.

## Claims

1. A circuit arrangement (A) for transmitting
- single-ended logic-level-based data signals and clock signals (HS) as well as
- differential common-mode-based data signals and clock signals (LP) between at least one sending arrangement (S) of the circuit arrangement (A) assignable to at least one data source and at least one receiving arrangement (E) of the circuit arrangement (A) assignable to at least one data sink
- in the form of at least one common signal stream (SI) serializing the single-ended logic-level-based data signals and clock signals (HS) and the differential data signals and clock signals (LP) and
- in the form of at least one bidirectional signal stream which comprises the differential data signals and clock signals (LP) as well as further binary signals (PD),
wherein the signal stream comprising both the differential data signals and clock signals (LP) and the binary signals (PD) is transmitted via at least one electrical or galvanic link (GA), and wherein the electrical or galvanic link (GA) has assigned to it,
- in the sending arrangement (S) at least one sending/receiving module (TXRXS) and
- in the receiving arrangement (E) at least one sending/receiving module (TXRXE),
by means of which the signal stream comprising both the differential data signals and clock signals (LP) and the binary signals (PD) is sent or received,
wherein the sending/receiving module (TXRXS / TXRXE) comprises:
- at least one multiplexer (MUP) for serializing the differential data signals and clock signals (LP) and the binary signals (PD),
- at least one binary / P[ulse]W[idth]M[odulation] converter (BPWMW) connected downstream of the multiplexer (MUP) for changing the serialized signal stream from a binary N[on]R[eturn-to]Z[ero]-format into a pulse-width-modulated format,
- at least one line driver (LD) connected downstream of the binary / P[ulse]W[idth]M[odulation] converter (BPWMW) and
- at least one terminating resistor (R0) connected downstream of the line driver (LD).

2. The circuit arrangement according to claim 1, **characterized in that** the common signal stream (SI) is transmittable via at least one optical medium (OM), in particular via at least one optical waveguide, for example via at least one glass fibre and/or via at least one plastic fibre.

3. The circuit arrangement according to claim 1 or 2, **characterized in that** the sending/receiving module (TXRXS / TXRXE), in particular in its function as a receiving module, comprises:
- at least one differential amplifier (DV) connected downstream of the terminating resistor (R0) for subtracting at least two signals (SA, SB) separated by the terminating resistor (R0), in particular weighted in the ratio of 1:2,
- at least one P[ulse]W[idth]M[odulation] / binary converter (PWMBW) connected downstream of the differential amplifier (DV) for changing from the pulse-width-modulated format into the binary N[on]R[eturn-to]Z[ero]-format and
- at least one demultiplexer (DMP) connected downstream of the P[ulse]W[idth]M[odulation] / binary converter (PWMBW) for deserializing into the differential data signals and clock signals (LP) and into the binary signals (PD).

4. The circuit arrangement according to claim 1 to 3, **characterized in that** the sending arrangement (S) comprises:
- at least one input (ES) for the data signals and clock signals,
- at least one sending interface logic (LS) connected downstream of the input (ES) for picking up the data signals and clock signals,
- at least one serializer (SE) connected downstream of the sending interface logic (LS) for generating the common signal stream (SI),
- at least one clock generator (PS), in particular phase-locked loop, for example clock multiplier unit, connected downstream of at least one clock module (CS) of the sending interface logic (LS), connected upstream of the serializer (SE) and provided for generating at least one reference clock,
- at least one output driver (AT) connected downstream of the serializer (SE), and
- at least one output (AS) connected downstream of the output driver (AT) for transmitting the common signal stream (SI) to the receiving arrangement (E).

5. The circuit arrangement according to claim 4, **characterized in that** the serializer (SE) comprises:
- at least one framer (FR) connected downstream of the sending interface logic (LS) for generating at least one frame recognizable in the receiving arrangement (E) for the common signal stream (SI) as well as
- at least one multiplexer (MU) connected downstream of the framer (FR) for generating the common signal stream (SI).

6. The circuit arrangement according to claim 5, **characterized in that** the framer (FR) is providable with the single-ended, logic-level-based data signals (HSDO, HSD1, HSD2, HSD3) as well as with the differential data signals (DD0+, DD0-, DD1+, DD1-, DD2+, DD2-, DD3+, DD3-) and that the framer, by means of at least one coder (KO), in particular by means of at least one 5b/6b coder block, embeds the differential data signals (DD0+, DD0-, DD1+, DD1-, DD2+, DD2-, DD3+, DD3-) in the stream of the single-ended, logic-level-based data signals (HSDO, HSD1, HSD2, HSD3).

7. The circuit arrangement according to at least one of claims 1 to 6, **characterized in that** the receiving arrangement (E) comprises:
- at least one input (EE) for the common signal stream (SI) transmitted by the sending arrangement (S),
- at least one input amplifier (EV) for picking up the common signal stream (SI),
- at least one clock and data recovery unit (CD) for recovering the data signals and clock signals from the common signal stream (SI),
- at least one clock module (CE) of at least one receiving interface logic (LE), said clock module (CE) connected downstream of the clock and data recovery unit (CD),
- at least one deserializer (DS) connected downstream of the clock and data recovery unit (CD) for re-parallelizing the data signals and for assigning the re-parallelized data signals to the receiving interface logic (LE), and
- at least one output (AE) connected downstream of the receiving interface logic (LE) for the data signals and clock signals.

8. The circuit arrangement according to claim 7, **characterized in that** the deserializer (DS) comprises:
- at least one demultiplexer (DM) connected downstream of the clock and data recovery unit (CD) for re-parallelizing the data signals as well as
- at least one deframer (DF) connected downstream of the demultiplexer (DM) for assigning the re-parallelized data signals to the receiving interface logic (LE).

9. The circuit arrangement according to claim 8, **characterized in that** the deframer (DF) separates the differential data signals (DD0+, DD0-, DD1+, DD1-, DD2+, DD2-, DD3+, DD3-) from the single-ended, logic-level-based data signals (HSDO, HSD1, HSD2, HSD3) by means of at least one decoder (DK), in particular by means of at least one 6b/5b decoder block, and assigns the re-parallelized data signals to the respective data lines (CH0+, CH0-, CH1+, CH1-, CH2+, CH2-, CH3+, CH3-).

10. A method for transmitting
- single-ended logic-level-based data signals and clock signals (HS) as well as
- differential common-mode-based data signals and clock signals (LP) between at least one sending arrangement (S) assignable to at least one data source and at least one receiving arrangement (E) assignable to at least one data sink
- in the form of at least one common signal stream (SI) serializing the single-ended logic-level-based data signals and clock signals (HS) and the differential data signals and clock signals (LP) and
- in the form of at least one bidirectional signal stream which comprises the differential data signals and clock signals (LP) as well as further binary signals (PD),
wherein the signal stream comprising both the differential data signals and clock signals (LP) and the binary signals (PD) is transmitted via at least one electrical or galvanic link (GA), and wherein the electrical or galvanic link (GA) has assigned to it,
- in the sending arrangement (S) at least one sending/receiving module (TXRXS) and
- in the receiving arrangement (E) at least one sending/receiving module (TXRXE),
by means of which the signal stream comprising both the differential data signals and clock signals (LP) and the binary signals (PD) is sent or received,
wherein the sending/receiving module (TXRXS / TXRXE) comprises:
- at least one multiplexer (MUP) for serializing the differential data signals and clock signals (LP) and the binary signals (PD),
- at least one binary / P[ulse]W[idth]M[odulation] converter (BPWMW) connected downstream of the multiplexer (MUP) for changing the serialized signal stream from a binary N[on]R[eturn-to]Z[ero]-format into a pulse-width-modulated format,
- at least one line driver (LD) connected downstream of the binary / P[ulse]W[idth]M[odulation] converter (BPWMW) and
- at least one terminating resistor (R0) connected downstream of the line driver (LD).

11. The method according to claim 10, **characterized in that** the differential data signals and clock signals (LP) and the binary signals (PD) are scanned at different frequencies, in particular **in that** the differential data signals and clock signals (LP) are scanned eight times more frequently than the binary signals (PD).

12. The method according to claim 10 or 11 and/or use of at least one circuit arrangement (A) according to at least one of claims 1 to 9 during serial and/or bundled, in particular CSI protocol-based and/or CSI-2 protocol-based and/or CSI-3 protocol-based and/or DSI protocol-based and/or DSI-2 protocol-based, unidirectional or bidirectional transmission of single-ended logic-level-based data signals and clock signals (HS) as well as of differential, in particular common-mode-based, data signals and clock signals (LP), in particular of D-PHY data signals and D-PHY clock signals, for example of up to four bit-wide MIPI-D-PHY data signals and MIPI-D-PHY clock signals, between at least one data source, in particular at least one camera (KA), for example of high resolution and/or for example acting as an image source, and/or at least one application processor (AP), and at least one data sink, in particular at least one application processor (AP) and/or at least one display unit (DU), for example of high resolution and/or for example acting as an image sink, for example at least one display or at least one monitor.

## Revendications

1. Dispositif de circuit (A) pour transmettre
- des signaux de données et d'horloge (HS) asymétriques basés sur des niveaux logiques ainsi que
- des signaux de données et d'horloge (LP) différentielles basés sur le mode commun entre au moins un dispositif d'émission (S) du dispositif de circuit (A) et au moins un dispositif de réception (E) du dispositif de circuit (A), le dispositif d'émission (S) pouvant être alloué à au moins une source de données et le dispositif de réception (E) pouvant être alloué à au moins un collecteur de données
- sous la forme d'au moins un flux de signaux (SI) commun sérialisant les signaux de données et d'horloge (HS) asymétriques basés sur des niveaux logiques et les signaux de données et d'horloge (LP) différentielles et
- sous la forme d'au moins un flux de signaux bidirectionnel comportant les signaux de données et d'horloge (LP) différentielles ainsi que d'autres signaux binaires (PD),
le flux de signaux comportant les signaux de données et d'horloge (LP) différentielles ainsi que les signaux binaires (PD) étant transmis par au moins une connexion (GA) électrique ou galvanique,
- dans le dispositif d'émission (S) au moins un module d'émission/réception (TXRXS) étant alloué à la connexion (GA) électrique ou galvanique ou
- dans le dispositif de réception (E) au moins un module d'émission/réception (TXRXE) étant alloué à la connexion (GA) électrique ou galvanique,
par lequel le flux de signaux comportant les signaux de données et d'horloge (LP) différentielles ainsi que les signaux binaires (PD) est émis ou reçu,
le module d'émission/réception (TXRXS, TXRXE) comportant :
- au moins un multiplexeur (MUP) pour sérialiser les signaux de données et d'horloge (LP) différentielles et les signaux binaires (PD),
- au moins un convertisseur binaire / modulation de largeur de pouls (BPWMW), connecté en aval du multiplexeur (MUP), pour transférer le flux de signaux sérialisé d'un format N[on-]R[etour à]Z[ero] binaire à un format modulé en largeur de pouls,
- au moins un pilote de ligne (LD), connecté en aval du convertisseur binaire / modulation de largeur de pouls (BPWMW), et
- au moins une résistance de terminaison (R0), connecté en aval du pilote de ligne (LD).

2. Dispositif de circuit selon la revendication 1, **caractérisé en ce que** le flux de signaux (SI) commun est transférable par au moins un support optique (OM), en particulier par au moins un guide d'ondes optique, par exemple par au moins une fibre de verre et/ou par au moins une fibre plastique.

3. Dispositif de circuit selon la revendication 1 ou 2, **caractérisé en ce que** le module d'émission/réception (TXRXS, TXRXE), en particulier dans sa fonction de module de réception, comporte :
- au moins un amplificateur différentiel (DV), connecté en aval de la résistance de terminaison (R0), pour soustraire au moins deux signaux (SA, SB) séparés par la résistance de terminaison (R0), en particulier pondérés dans le rapport de 1:2,
- au moins un convertisseur modulation de largeur de pouls / binaire (PWMBW), connecté en aval du amplificateur différentiel (DV), pour transférer du format modulé en largeur de pouls au format N[on-]R[etour à]Z[ero] binaire et
- au moins un démultiplexeur (DMP), connecté en aval du convertisseur modulation de largeur de pouls / binaire (PWMBW), pour désérialiser aux signaux de données et d'horloge (LP) différentielles et aux signaux binaires (PD).

4. Dispositif de circuit selon au moins l'une des revendications 1 à 3, **caractérisé en ce que** le dispositif d'émission (S) comporte :
- au moins une entrée (ES) pour les signaux de données et signaux d'horloge,
- au moins une logique d'interface d'émission (LS), connectée en aval de l'entrée (ES), pour recevoir les signaux de données et signaux d'horloge,
- au moins un sérialiseur (SE), connecté en aval de la logique d'interface d'émission (LS), pour générer le flux de signaux (SI) commun,
- au moins un générateur d'horloge (PS), en particulier phase-locked loop, par exemple clock multiplier unit, connecté en aval d'au moins un module d'horloge (CS) de la logique d'interface d'émission (LS), connecté en amont du sérialiseur (SE) et prévu pour générer au moins une horloge de référence,
- au moins un pilote de sortie (AT), connecté en aval du sérialiseur (SE), et
- au moins une sortie (AS), connectée en aval du pilote de sortie (AT), pour transmettre le flux de signaux (SI) commun au dispositif de réception (E).

5. Dispositif de circuit selon la revendication 4, **caractérisé en ce que** le sérialiseur (SE) comporte :
- au moins un encadreur (FR), connecté en aval de la logique d'interface d'émission (LS), pour générer au moins un cadre pour le flux de signaux (SI) commun reconnaissable dans le dispositif de réception (E) et
- au moins un multiplexeur (MU), connecté en aval du encadreur (FR), pour générer le flux de signaux (SI) commun.

6. Dispositif de circuit selon la revendication 5, **caractérisé en ce que** l'encadreur (FR) peut être chargé avec les signaux de données (HSDO, HSD1, HSD2, HSD3) asymétriques basés sur des niveaux logiques ainsi que avec les signaux de données (DD0+, DD0-, DD1+, DD1-, DD2+, DD2-, DD3+, DD3-) différentielles et que l'encadreur (FR) intègre les signaux de données (DD0+, DD0-, DD1+, DD1-, DD2+, DD2-, DD3+, DD3-) différentielles dans le flux de signaux de données (HSDO, HSD1, HSD2, HSD3) asymétriques basés sur des niveaux logiques au moyen d'au moins un codeur (KO), en particulier au moyen d'au moins un bloc de codage 5b/6b.

7. Dispositif de circuit selon au moins l'une des revendications 1 à 6, **caractérisé en ce que** le dispositif de réception (E) comporte :
- au moins une entrée (EE) pour le flux de signaux (SI) commun transmis par le dispositif d'émission (S),
- au moins un amplificateur d'entrée (EV) pour recevoir le flux de signaux (SI) commun,
- au moins une unité de récupération d'horloge et de données (CD) pour restituer les signaux de données et signaux d'horloge du flux de signaux (SI) commun,
- au moins un module d'horloge (CE) d'au moins une logique d'interface de reception (LE), lequel module d'horloge (CE) connecté en aval de l'unité de récupération d'horloge et de données (CD),
- au moins un désérialiseur (DS), connecté en aval de l'unité de récupération d'horloge et de données (CD), pour reparalléliser les signaux de données et pour allouer les signaux de données reparallallisés à la logique d'interface de reception (LE) et
- au moins une sortie (AE), connectée en aval de la logique d'interface de reception (LE), pour les signaux de données et d'horloge.

8. Dispositif de circuit selon la revendication 7, **caractérisé en ce que** le désérialiseur (DS) comporte :
- au moins un démultiplexeur (DM), connecté en aval de l'unité de récupération d'horloge et de données (CD), pour reparalléliser les signaux de données et
- au moins un décadreur (DF), connecté en aval du démultiplexeur (DM), pour allouer les signaux de données reparallélisés à la logique d'interface de reception (LE).

9. Dispositif de circuit selon la revendication 8, **caractérisé en ce que** le décadreur (DF) sépare les signaux de données (DD0+, DD0-, DD1+, DD1-, DD2+, DD2-, DD3+, DD3-) différentielles des signaux de données (HSDO, HSD1, HSD2, HSD3) asymétriques basés sur des niveaux logiques au moyen d'au moins un décodeur (DK), en particulier au moyen d'au moins un bloc de décodage 6b/5b, et que le décadreur (DF) alloue les signaux de données reparallélisés aux lignes de données (CH0+, CH0-, CH1+, CH1-, CH2+, CH2-, CH3+, CH3-) respectives.

10. Procédé de transmission
- des signaux de données et d'horloge (HS) asymétriques basés sur des niveaux logiques ainsi que
- des signaux de données et d'horloge (LP) différentielles basés sur le mode commun entre au moins un dispositif d'émission (S) et au moins un dispositif de réception (E), le dispositif d'émission (S) pouvant être alloué à au moins une source de données et le dispositif de réception (E) pouvant être alloué à au moins un collecteur de données
- sous la forme d'au moins un flux de signaux (SI) commun sérialisant les signaux de données et d'horloge (HS) asymétriques basés sur des niveaux logiques et les signaux de données et d'horloge (LP) différentielles et
- sous la forme d'au moins un flux de signaux bidirectionnel comportant les signaux de données et d'horloge (LP) différentielles ainsi que d'autres signaux binaires (PD),
le flux de signaux comportant les signaux de données et d'horloge (LP) différentielles ainsi que les signaux binaires (PD) étant transmis par au moins une connexion (GA) électrique ou galvanique,
- dans le dispositif d'émission (S) au moins un module d'émission/réception (TXRXS) étant alloué à la connexion (GA) électrique ou galvanique ou
- dans le dispositif de réception (E) au moins un module d'émission/réception (TXRXE) étant alloué à la connexion (GA) électrique ou galvanique,
par lequel le flux de signaux comportant les signaux de données et d'horloge (LP) différentielles ainsi que les signaux binaires (PD) est émis ou reçu,
le module d'émission/réception (TXRXS, TXRXE) comportant :
- au moins un multiplexeur (MUP) pour sérialiser les signaux de données et d'horloge (LP) différentielles et les signaux binaires (PD),
- au moins un convertisseur binaire / modulation de largeur de pouls (BPWMW), connecté en aval du multiplexeur (MUP), pour transférer le flux de signaux sérialisé d'un format N[on-]R[etour à]Z[ero] binaire à un format modulé en largeur de pouls,
- au moins un pilote de ligne (LD), connecté en aval du convertisseur binaire / modulation de largeur de pouls (BPWMW), et
- au moins une résistance de terminaison (R0), connecté en aval du pilote de ligne (LD).

11. Procédé selon la revendication 10, **caractérisé en ce que** les signaux de données et d'horloge (LP) différentielles et les signaux binaires (PD) sont échantillonnés avec des fréquences différentes, en particulier que les signaux de données et d'horloge (LP) différentielles sont échantillonnés huit fois plus fréquemment que les signaux binaires (PD).

12. Procédé selon la revendication 10 ou 11 et/ou utilisation d'au moins un dispositif de circuit (A) selon au moins l'une des revendications 1 à 9 lors de la transmission série et/ou groupée, en particulier basée sur le protocole CSI et/ou basée sur le protocole CSI-2 et/ou basée sur le protocole CSI-3 et/ou basée sur le protocole DSI et/ou basée sur le protocole DSI-2, unidirectionnelle ou bidirectionnelle de signaux de données et d'horloge (HS) asymétriques basés sur des niveaux logiques ainsi que de signaux de données et d'horloge (LP) différentielles, en particulier basés sur le mode commun, en particulier de signaux de données D-PHY et signaux d'horloge D-PHY, par exemple de signaux de données MIPI-D-PHY et signaux d'horloge MIPI-D-PHY jusqu'à quatre bits de largeur, entre au moins une source de données, en particulier au moins une caméra (KA), par exemple à haute résolution et/ou par exemple dans la fonction d'une source d'image, et/ou au moins un processeur d'application (AP), et au moins un collecteur de données, en particulier au moins un processeur d'application (AP) et/ou au moins une unité d'affichage (DU), par exemple à haute résolution et/ou par exemple dans la fonction d'un collecteur d'image, par exemple au moins un écran ou au moins un moniteur.
